# EUROPÄISCHE PATENTSCHRIFT

(11) **EP 2 865 174 B1**
(45) Veröffentlichungstag und Bekanntmachung des Hinweises auf die Patenterteilung: **28.08.2019**
(21) Anmeldenummer: 13719106.0
(22) Anmeldetag: 29.04.2013
(51) Int. Cl.: H04N 5/225, B60R 11/04, B60R 11/00

(54) **KAMERAMODUL FÜR EIN FAHRZEUG UND VERFAHREN ZU DESSEN HERSTELLUNG**
CAMERA MODULE FOR A VEHICLE, AND METHOD FOR PRODUCING SAME
MODULE DE CAMÉRA POUR UN VÉHICULE ET PROCÉDÉ POUR SA FABRICATION

(30) Priorität: 26.06.2012 DE 102012210818
(43) Veröffentlichungstag der Anmeldung: 29.04.2015
(73) Patentinhaber: Robert Bosch GmbH, 70442 Stuttgart (DE)
(72) Erfinder: SEGER, Ulrich, 71229 Leonberg-Warmbronn (DE); APEL, Uwe, 72666 Neckartailfingen (DE); FRITZ, Steffen, 75449 Wurmberg (DE)
(86) Internationale Anmeldenummer: PCT/EP2013/058842
(87) Internationale Veröffentlichungsnummer: WO 2014/000914

(56) Entgegenhaltungen:
- WO-A1-2006/087284
- WO-A1-2007/107392
- DE-A1-102005 000 655
- DE-A1-102010 003 955
- US-A1- 2005 035 421
- US-B1- 6 507 700

## Beschreibung

### Stand der Technik

Kameramodule für Fahrzeuge weisen im Allgemeinen ein Objektiv mit einer Linsenfassung und mindestens einer Linse, einen Bildsensor, und eine Trägereinrichtung auf, auf der der Bildsensor montiert und kontaktiert ist. Die Trägereinrichtung ist hierzu z. B. als Leiterplatte ausgebildet. Das Objektiv ist in einer Objektivaufnahme (Linsenhalter, lens holder) längsverstellbar aufgenommen, um eine Justierung zu ermöglichen. Die Objektivaufnahme ist im Allgemeinen an der Trägereinrichtung befestigt.

Die Justierung erfolgt, indem z. B. ein Testpattern in einer relevanten Gegenstandsweite erfasst wird und die Bildsignale des Bildsensors ausgewertet werden, um eine Längsposition des Objektivs mit bestmöglichem Kontrast zu ermitteln und einzustellen, damit der Bildsensor in der Bildebene liegt. Nachfolgend wird das Objektiv an der Objektivaufnahme fixiert. Dann wird die Baueinheit aus Trägereinrichtung mit Bildsensor und an der Trägereinrichtung fixiertem Objektiv, die allgemein als Imagermodul bezeichnet wird, in ein Kameragehäuse eingebaut, das zum Schutz vor äußeren Einflüssen und zur Anbringung im Fahrzeug dient.

Die elektrische Verbindung des Bildsensors sollte möglichst kraftfrei erfolgen, um den Einfluss auf die Lagestabilität in der Bildebene gering zu halten. Die aus dem Bildsensor und dem Objektiv gebildete Baugruppe definiert die optische Achse und sollte vorzugsweise so in das Kameragehäuse montierbar sein, dass die zentrale Blickachse, d.h. die Symmetrieachse des Erfassungsbereichs bzw. Öffnungswinkels, genau definiert werden kann.

Die DE 10 2009 027 514 A1 zeigt ein derartiges Kameramodul, bei der das Objektiv an der Objektivaufnahme (Linsenhalter) durch einen unter UV-Strahlung aushärtenden Kleber fixiert wird.

Die US 6 507 700 B1 zeigt den Aufbau einer wasserdichten Kamera, welcher ein Objektiv, ein Gehäuse und einen Bildsensor umfasst.

Die WO 2007/107392 A1 zeigt ein Kameramodul, bei welchem der Bildsensor von der Rückseite der Optik angebracht und fixiert werden kann.

Die DE 10 2010 003955 A1 zeigt ein mehrteiliges Kameragehäuse für ein Fahrzeug, in welchem ein Bildsensor und ein Optikhalter mit einem Objektiv, sowie ein Schaltungsträger zur Aufnahme eines Steckeranschlusses aufgenommen sind.

Die WO 2006/087284 A1 offenbart ein Verfahren zur optischen Justage einer Bildgebeoptik mit mindestens einem optischen Sensormedium, wobei ein plastisch verformbares Justageelement durch Einwirkung einer Kraft plastisch verformt wird.

Die US 2005/035421 A1 zeigt ein kompaktes bildgebendes Modul, bei welchem der bildgebende Sensor auf einer elektrischen Trägerschicht angebracht wird.

Die DE 10 2005 000655 A1 zeigt eine Bilderfassungseinrichtung mit einer auf einer Platine angeordneten Schaltungsanordnung und einem Bildsensor, wobei auf der den Bildsensor tragenden Platine wenigstens eine Abschirmlage angeordnet ist und diese Abschirmlage elektrisch leitend mit den Gehäuseleitungen der Platine und mit dem Gehäuse verbunden ist.

Nachteilhaft sind im Allgemeinen die aufwendige Herstellung aus einer Vielzahl von Bauteilen mit entsprechenden Toleranzen und die Problematik der Festlegung der Blickachse bezüglich des Kameragehäuses.

### Offenbarung der Erfindung

Das Objektiv ist mit dem Kameragehäuse verbunden. Mit dieser Verbindung wird das Objektiv durch das Kameragehäuse getragen bzw. gehalten. Bei einem Kameramodul nach Anspruch 1 kann erfindungsgemäss die Trägereinrichtung gemäß unterschiedlichen Ausführungsformen am Objektiv und/oder am ersten Gehäuseteil befestigt sein und wird hierdurch gehalten.

Anders als bei herkömmlicher Ausbildung wird somit nicht das Objektiv von der Trägereinrichtung gehalten und/oder getragen, die dann wiederum von dem Kameragehäuse getragen wird, sondern das Kameragehäuse, insbesondere ein erstes Gehäusteil, dient bereits zur Aufnahme und zum Halten des Objektivs.

Vorteilhafterweise sind entsprechende Passungsflächen (Kontaktflächen) an dem Objektiv, z. B. der Außenseite der Linsenfassung, und dem ersten Gehäuseteil des Kameragehäuses vorgesehen. Die Verbindung kann direkt, d.h. durch direkte Anlage von Passungsflächen, oder auch indirekt durch dazwischen gelegte Zwischenmittel, wie Distanzringe, ausgebildet sein. An dieser Baueinheit aus erstem Gehäuseteil und Objektiv ist dann die Trägereinrichtung mit montiertem Bildsensor befestigt.

Bei dem erfindungsgemäßen Herstellungsverfahren nach Anspruch 11 wird somit zunächst das Objektiv in das erste Gehäuseteil gesetzt, woraufhin nachfolgend die Justage und/oder Fokussierung erfolgt, bei der die Trägereinrichtung mitsamt montiertem Bildsensor relativ zu dem Objektiv positioniert wird, insbesondere durch Längsverstellung entlang einer Symmetrieachse des Objektivs, die somit die optische Achse bildet. Durch die nachfolgende Fixierung der Trägereinrichtung - gemäß unterschiedlichen Ausführungsformen am Objektiv und/oder am ersten Gehäuseteil - sind somit die optischen Eigenschaften, insbesondere die optische Achse und Lage der Bildebene relativ zum Bildsensor und weiterhin auch die relative Lage der optischen Achse zum Kameragehäuse festgelegt. Hieran kann sich dann z. B. die kraftfreie Kontaktierung der Trägereinrichtung an z. B. einem mit dem ersten Gehäuseteil verbundenen Haupt-Schaltungsträger anschließen. Das Kameragehäuse kann dann z. B. durch ein zweites Gehäuseteil verschlossen werden.

Das erste Gehäuseteil kann insbesondere als Druckgussteil aus Metall, z. B. Aluminium, hergestellt werden, um eine hohe Formbeständigkeit, Stabilität und Genauigkeit der Positionierung des daran angebrachten Objektivs zu ermöglichen. Hierzu kann das erste Gehäuseteil in seiner Kontaktfläche zur Aufnahme des Objektivs vorzugsweise nachbearbeitet werden.

Erfindungsgemäß ergeben sich hierdurch bereits einige Vorteile. So wird durch die Anbringung des Objektivs am ersten Gehäuseteil bereits sichergestellt, dass Toleranzen der Trägereinrichtung und deren Anbringung am Gehäuse nicht die Lage der Symmetrieachse des Objektivs relativ zum Kameragehäuse beeinflussen und somit auch die Blickrichtung nicht oder nicht mehr relevant beeinflussen, wie es insbesondere bei herkömmlicher Befestigung des Objektivs an einer Objektivaufnahme der Trägereinrichtung und nachfolgender Anbringung der Trägereinrichtung im Kameragehäuse erfolgen kann.

Die Trägereinrichtung zum Halten und Kontaktieren des Bildsensors ist vorzugsweise in MID-Technik (Molded Interconnect Devices = Spritzgegossene Schaltungsträger) gefertigt. Bei MID-Bauteilen befinden sich metallische Leiterbahnen für elektrische Verbindungen direkt auf z. B. spritzgegossenen Kunststoffträgern. Hiermit lassen sich elektrischen Schaltungen auf räumlich komplexeren Strukturen verwirklichen, wobei die Strukturen gleichzeitig auch mechanische Funktionen übernehmen können, ohne dass zusätzliche Teile anzustücken sind. Hierdurch wird auch eine hohe mechanische Festigkeit erreicht.

Somit kann ein zusätzlicher Objektivhalter (lens holder), der an der Trägereinrichtung anzubringen ist, entfallen, so dass auch hierdurch die Teileanzahl und die auftretenden Toleranzen verringert werden können. Insbesondere ermöglicht die Ausbildung der Trägereinrichtung in MID-Technik geeignete Formgebungen zur Führung und Positionierung am Objektiv und zur Abdichtung und/oder auch zur Befestigung am ersten Gehäuseteil. Somit kann die Trägereinrichtung bei der Fixierung nach der Fokussierung statt am Objektiv auch an dem mit dem Objektiv starr verbundenen ersten Gehäuseteil befestigt werden, was gemäß unterschiedlichen Ausführungsformen durch die in weiten Bereichen freie Gestaltbarkeit des ersten Gehäuseteils und der Trägereinrichtung unterschiedlich erfolgen kann, um Dichtigkeit, hohen Stabilität und prozesstechnisch leichte Befestigung durch z. B. Klebung sicher zu stellen.

Somit ermöglicht die dreidimensionale, einstückige (MID-) Ausbildung der Trägereinrichtung besondere Vorteile in Kombination mit der direkten Anbindung des Objektivs am ersten Gehäuseteil.

Das zweite Gehäuseteil kann z. B. auch als Metall-Druckgussteil ausgebildet werden.

Erfindungsgemäß wird ermöglicht, dass für die optischen Eigenschaften einschließlich Justage, Positionierung des Bildsensors und Ausrichtung der Blickrichtung des Imagermoduls im Kameragehäuse, vorzugsweise auch der Aufnahme eines Haupt-Schaltungsträgers für die weiteren aktiven und passiven Bauteile des Kameramoduls und ggf. auch der Anbringung eines Kamerahalters, lediglich das erste Gehäusteil relevant ist und das zweite Gehäuseteil somit lediglich der Vervollständigung des Kameragehäuses und der Abdichtung dient.

Erfindungsgemäß wird somit auch eine schnelle, sichere, genaue sowie auch kostengünstige Herstellung ermöglicht. Hierbei wird eine kompakte Form bei einer geringen Anzahl von Komponenten ermöglicht, die mit hoher Präzision gefertigt werden können.

Kurze Beschreibung der Zeichnungen
- Fig. 1: zeigt schematisch eine erste Ausführungsform eines Kameramoduls im Längsschnitt;
- Fig. 2: zeigt die Baugruppe aus Objektiv und Trägereinrichtung der Ausführungsform von Fig. 1;
- Fig. 3: zeigt eine zweite Ausführungsform eines Kameramoduls im Längsschnitt;
- Fig. 4: zeigt die Baugruppe aus Objektiv und Trägereinrichtung der Ausführungsform von Fig. 3
- Fig. 5: zeigt eine dritte Ausführungsform eines Kameramoduls im Längsschnitt;
- Fig. 6: zeigt die Baugruppe aus Objektiv und Trägereinrichtung der Ausführungsform von Fig. 5;
- Fig. 7: Detailvergrößerungen zu den verschiedenen Ausführungsformen zur Darstellung einiger relevanter Flächen; und
- Fig. 8: ein Flussdiagramm eines erfindungsgemäßen Herstellungsverfahrens.

### Beschreibung der Ausführungsformen

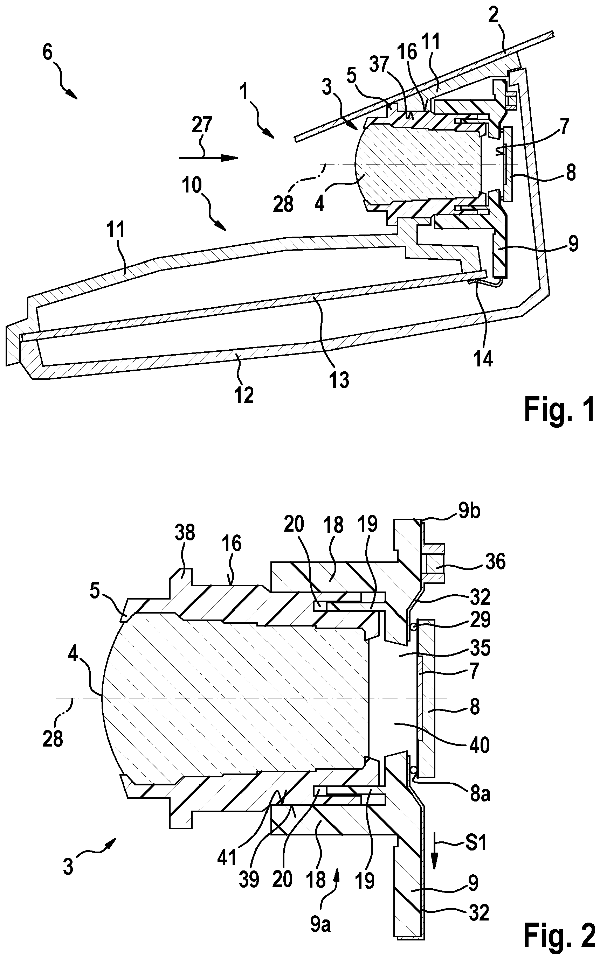

Das Kameramodul 1 der Fig. 1, 2 und 3 ist jeweils hinter einer Fahrzeugscheibe 2, insbesondere Frontscheibe oder Heckscheibe, eines (nicht detaillierter dargestellten) Fahrzeugs 6 angebracht. Strahlung 27, insbesondere Licht im sichtbaren Bereich oder auch im IR-Bereich, wird von dem Kameramodul 1 aufgenommen. Die Strahlung 27 kann insbesondere durch die Fahrzeugscheibe 2 treten, d.h. aus dem Außenbereich kommen, und/oder aus dem Fahrzeug-Innenraum zur Innenraumüberwachung; weiterhin kann bei einer Sensorik der Scheibenaußenfläche auch z. B. Licht in die Fahrzeugscheibe 2 eingekoppelt und nachfolgend von dem Kameramodul 1 sensiert werden.

Das Kameramodul 1 weist auf:
ein Objektiv 3 mit einer Linsenfassung 5 und mindestens einer in der Linsenfassung 5 aufgenommenen Linse 4, einen Bildsensor 8, eine Trägereinrichtung 9 sowie ein Kameragehäuse 10. Weiterhin kann z. B. ein Kamerahalter zur Befestigung des Kameragehäuses 10 an der Fahrzeugscheibe 2 vorgesehen sein.

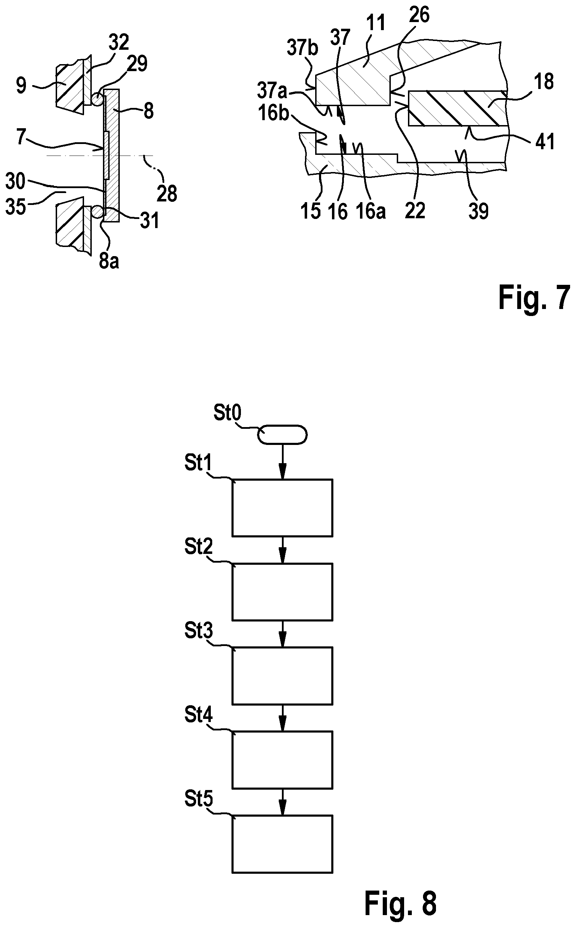

Statt, wie gezeigt, einer einzigen Linse 4 können auch mehrere Linsen 4 vorgesehen sein. Der Bildsensor 8 zum Erfassen und Wandeln optischer Signale in elektrische Signale S1 kann insbesondere ein Imager-Chip sein. Der Bildsensor 8 und das Objektiv 3 definieren eine optische Achse 28. Wie insbesondere der Fig. 7 entnommen werden kann, weist der Bildsensor 8 eine lichtempfindliche Sensorfläche 7 und Signalleitungen 30 sowie Kontaktierflächen 31 auf, die über Kontaktiermittel 29, insbesondere Stud-Bumps 29, mit Leiterbahnen 32 der Trägereinrichtung 9 kontaktiert sind. Der Bildsensor 8 ist vorzugsweise in Flip-Chip-Technik montiert, so dass auf seiner Vorderseite 8a (Oberseite) sowohl die lichtempfindliche Sensorfläche 7 als auch die Signalleitungen 30 und Kontaktierflächen 31 angeordnet sind. Somit ist in der Trägereinrichtung 9 im Bereich der optischen Achse 28 eine Aussparung 35 für den Lichtdurchtritt vorgesehen.

Die Trägereinrichtung 9 ist als MID (Molded Interconnect Device)-Trägereinrichtung 9 aus einem Kunststoff ausgebildet und dreidimensional konturiert. Sie kann außer dem Bildsensor 8 auch einen Teil der Schaltkreise zu Signalaufbereitung des Bildsignals S1 aufnehmen, d.h. es können auf der Trägereinrichtung 9 zusätzlich passive Bauelemente 36 zur Signalkonditionierung angebracht sein, von denen eines angedeutet ist. Die Leiterbahnen 30 sind auf einer Rückseite 9b der Trägereinrichtung 9 angebracht und bilden vorzugsweise eine einlagige Verdrahtungsebene; sie können sich wie gezeigt zur besseren Kontaktierung zu einer Seitenkante der Trägereinrichtung 9 erstrecken. Die Vorderseite 9a der Trägereinrichtung 9 ist stärker konturiert.

Die Trägereinrichtung 9 weist auf ihrer Vorderseite 9a Objektiv-Aufnahmemittel 18, 19 zur Aufnahme und/oder Abdichtung des Objektivs 3 auf, die gemäß den Ausführungsformen unterschiedlich ausgebildet sind und jeweils eine Verschiebung des Objektivs 3 in Richtung der optischen Achse 28 zur Fokussierung des Kameramoduls 1 ermöglichen, so dass eine Positionierung des Bildsensors 8 in der jeweiligen Bildebene bei Erfassung z. B. eines externen Testpatterns ermöglicht wird. Die Objektiv-Aufnahmemittel 18, 19 sind gemäß den Ausführungsformen unterschiedlich ausgebildet; hierbei ist in diesen Ausführungsformen jeweils ein innerer Dichtring 19 vorgesehen, der in eine Nut 20 der Linsenfassung 5 eingreift.

Das Kameragehäuse 10 ist aus einem ersten Gehäuseteil 11 zum Aufnehmen des Objektivs 3 und der Trägereinrichtung 9 und einem zweiten Gehäuseteil 12 zum Verschließen des ersten Gehäuseteils 11 zusammengesetzt. Die Gehäuseteile 11 und 12 werden vorzugsweise jeweils als Metall-Druckguss-Teile und insbesondere als Aluminium-Druckguss-Teile hergestellt. Bei den gezeigten Ausführungsformen ist jeweils das erste Gehäuseteil 11 das obere Gehäuseteil und wird durch das untere zweite Gehäuseteil 12 nach hinten und unten abgeschlossen. Grundsätzlich kann das Kameragehäuse 10 noch weitere Bauteile aufweisen; die gezeigten Ausführungsformen ermöglichen jedoch eine vollständige Aufnahme der Komponenten bei geringen Herstellungskosten, da die Gehäuseteile 11, 12 keine Hintergreifungen aufweisen.

Die Befestigung des Objektivs 3 bzw. der Linsenfassung 5 des Objektivs 3 an dem ersten Gehäuseteil 11 kann gemäß den mehreren Ausführungsformen unterschiedlich erfolgen. Allgemein weist das erste Gehäuseteil 11 eine erste Gehäuse-Passungsfläche 37 auf, mit der es an einer ersten Objektiv-Passungsfläche 16 (direkt oder indirekt) anliegt. Vorzugsweise erstreckt sich, wie in Fig. 7 gezeigt, jeweils die erste Objektiv-Passungsfläche 16 über Teilflächen 16a und 16b, wobei die Teilfläche 16a eine zylindrische Außenfläche der Linsenfassung 5 darstellt und die Teilfläche 16b an der Rückseite einer Schulter 38 ausgebildet ist und als Anschlag beim Einsetzen des Objektivs 3 in das Gehäuseteil 3 dient. Entsprechend wird die erste Gehäuse-Passungsfläche 37 des ersten Gehäuseteils 11 durch die Teilflächen 37a und 37b gebildet, von denen die Teilfläche 37a zylindrisch ist und die Teilfläche 37b z. B. senkrecht zu dieser verläuft und zur Anlage an der Teilfläche 16b dient. Die erste Gehäuse-Passungsfläche 37 ist zur genauen Aufnahme vorzugsweise durch maschinelle Nachbearbeitung des durch Druckguss hergestellten Gehäuseteils 11 präzise ausgeformt, insbesondere auch durch spanende Nachbearbeitung. Sie dient somit als erster Passungsabschnitt für die Passung des Objektivs 3 in dem ersten Gehäusteil 11.

Es können auch Zwischenmittel, z. B. Distanzringe, zwischen die erste Gehäuse-Passungsfläche 37 und die erste Objektiv-Passungsfläche 16 gelegt werden, wobei die Distanzringe auf die Brennweite des Objektivs 3 abgestimmt sind. Somit ist erfindungsgemäß auch eine indirekte Anlage der Flächen 37 und 16 über solche Zwischenmittel möglich. Relevant ist die Positionierung und Befestigung des Objektivs am ersten Gehäusteil über die Passungsflächen 16 und 37.

Die gezeigten Ausführungsformen der Figuren 1 bis 6 unterscheiden sich insbesondere bezüglich der Befestigung der MID-Trägereinrichtung 9 sowie der Ausbildung der Passungsflächen.

Gemäß der Ausführungsform der Fig. 1 und 2 wird die MID-Trägereinrichtung 9 nur an dem Objektiv 3 bzw. deren Linsenfassung 5 befestigt. Hierzu weist die MID-Trägereinrichtung 9 zusätzlich zu dem in die Nut 20 eingreifenden inneren Dichtungsring 19 einen äußeren Trägerring 18 auf, der mit einer Passungsfläche 41 auf einer zylindrischen zweiten Objektiv-Passungsfläche 39 aufliegt, so dass die Längsverschiebbarkeit entlang der optischen Achse 38 zur Fokussierung ermöglicht ist. Die zweite Objektiv-Passungsfläche 39 dient somit als zweiter Passungsabschnitt des Objektivs 3 für die Passung des Objektivs 3 an der Trägereinrichtung 9. Die beiden Objektiv-Passungsflächen 16 und 39 sind somit zylindrisch und somit präzise ausbildbar und liegen in Richtung der optische Achse 38 hintereinander. Durch die Ringe 18, 19 und die Nut 20 wird auch ein Dichtlabyrinth zur Abdichtung eines Hinterlinsenraums 40 zwischen dem Bildsensor 8 bzw. dessen Sensorfläche 7 und der Linse 4 erreicht. Der innere Dichtungsring 19 kann ohne tragende Funktion sein und lediglich zur Führung und/oder Abdichtung dienen.

Die Trägereinrichtung 9 ist über ihre Leiterbahnen 32 und eine Datenverbindung 14, z. B. ein Flex-Kabel oder auch Drahtbonds, mit einem Haupt-Schaltungsträger, z. B. einer Leiterplatte 13, verbunden, die die volle Funktionalität des Kameramoduls 1 gewährleistet und somit aktive und passive Bauelemente 42 zur Aufnahme und Verarbeitung des Bildsignals S1, vorzugsweise auch zur Kontaktierung, im Fahrzeug 6, aufweist.

Zur Montage und/oder Herstellung des Kameramoduls 1 der Fig. 1, 2 wird gemäß Fig. 8 nach einem Start in Schritt St0 in einem Schritt St1 zunächst das aus Linsenfassung 5 und Linse 4 gebildete Objektiv 3 von der Vorderseite her, d.h. in Fig. 1, 2 von links, in das erste Gehäuseteil 11 gesetzt, so dass die Flächen 16 und 37 zur Anlage gelangen, d.h. auf Anschlag der Schulter 38 der Linsenfassung 5 am ersten Gehäuseteil 11. Hierbei kann zwischen die Flächen 16, 37 ein Kleber verwendet werden, oder z. B. eine Heißverstemmung oder Verschweißung erfolgen.

Dann wird in einem zweiten Schritt St2 die Trägereinrichtung 9 mit bereits montiertem und kontaktiertem Bildsensor 8 von rechts, d.h. der Rückseite her, an die Linsenfassung 5 angesetzt, so dass der innerer Trägerring 19 in die Nut 20 eingreift und der äußere Trägerring 18 an der Objektiv-Passungsfläche 39 anliegt. Hierbei erfolgt eine Längsverschiebung der Trägereinrichtung 9 entlang der optischen Achse 28 unter Erfassung eines Testpatterns und Auswertung der Bildsignale S1, bis eine Justage durch Erreichen eines optimalen Bildes erreicht ist.

In Schritt St3 wird die Trägereinrichtung 9 dann an der Linsenfassung 5 fixiert, z. B. durch Verklebung des inneren Trägerrings 19 in der Nut 20 und/oder durch Verleben oder Verschweißen der Passungsfläche 41 des äußeren Trägerrings 18 an der zweiten Objektiv-Passungsfläche 39.

In Schritt St4 wird die Trägereinrichtung 9 über die Datenleitung 14 mit der Leiterplatte 13 kontaktiert, wobei die Leiterplatte 13 z. B. bereits an dem ersten Gehäuseteil 11 durch Klebung fixiert ist. Diese Kontaktierung des Schrittes St4 kann jedoch auch schon vorher erfolgt sein, so dass die Leiterplatte 13 mit ihren Komponenten bereits zur Auswertung der Bildsignale S1 herangezogen wird.

In Schritt St5 wird das Kameragehäuse 10 verschlossen, indem das untere zweite Gehäusteil 12 an dem ersten Gehäusteil 11 befestigt wird, z. B. durch Verstemmen, Verkleben, Verschweißen oder andere industriell einsetzbare Befestigungsarten.

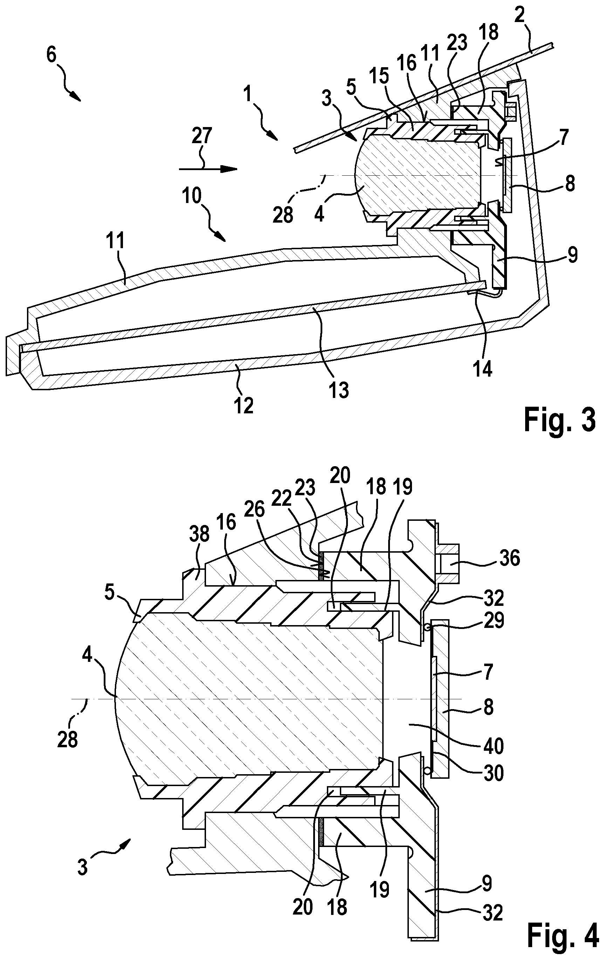

Bei der zweiten Ausführungsform der Fig. 3, 4 weist das Objektiv 3 nur die erste Objektiv-Passungsfläche 16 als Passungsabschnitt auf, der den Sitz des Objektivs 3 im ersten Gehäuseteil 11 gewährleistet, nicht jedoch die zweite Objektiv-Passungsfläche 41 der Fig. 1, 2.

Die Fixierung der Trägereinrichtung in Schritt St3 erfolgt bei der zweiten Ausführungsform an dem ersten Gehäuseteil 11, hier z. B. über eine stirnseitige, ringförmige Kontaktfläche (Passungsfläche) 22 des äußeren Trägerrings 18 und eine entsprechende ringförmige zweite Gehäuse-Passungsfläche 26, z. B. durch Verkleben, insbesondere mit einer Kleberschicht 23, die z. B. von außen eingebracht wird und einen Spalt zwischen den Flächen 22, 26 auffüllt.

Die zweite Ausführungsform bietet zusätzliche Freiheitsgrade als Toleranzausgleich für die Positionierung der Trägereinrichtung 9, mit denen gewisse Abweichungen des Objektivs 3, insbesondere Bildebenenverkoppungen, oder der Trägereinrichtung 9, insbesondere einer lateraler Versatz des Bildsensors 8, bei einer aktiven Justierung bis zu einem gewissen Maß kompensiert werden können. Die Nut 20 für den inneren Dichtring 19 (Partikelabschirmring) kann vorzugsweise größer ausgelegt werden als in Fig. 1, um diesen Toleranzausgleich zu unterstützen.

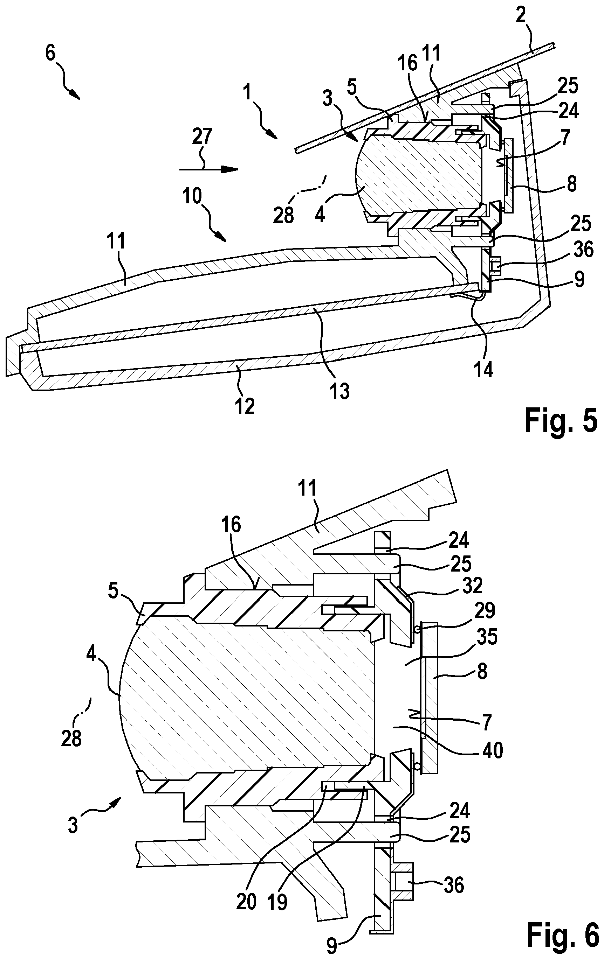

Bei der dritten Ausführungsform der Figuren 5 und 6 erfolgt die Fixierung der den Bildsensor 8 tragendenTrägereinrichtung 9 ebenfalls an dem ersten Gehäuseteil 11; es ist jedoch kein äußerer Trägerring 18 vorgesehen, sondern eine punktuelle Verankerung. Hierzu weist die Trägereinrichtung 9 wie in Fig. 6 gezeigt eine oder mehrere Aufnahmen 24 (Ausnehmungen, Durchstecklöcher) auf, in die eine entsprechende Anzahl von sich vorzugsweise parallel zur optischen Achse 28 erstreckenden Ankerelementen 25 des ersten Gehäuseteils 11 greift. Diese Anbindung kann wiederum durch Klebung erfolgen.

Vorzugsweise sind mindestens drei Aufnahmen 24 in der Trägereinrichtung 9 und Ankerelemente 25 des ersten Gehäuseteils 11 vorgesehen, z. B. in symmetrischer Anordnung, insbesondere 120°. Durch die mehreren punktuellen Anbindungen wird eine hohe mechanische Stabilität erreicht.

## Patentansprüche

1. Kameramodul (1), wobei das Kameramodul (1) mindestens aufweist:
ein Objektiv (3) mit einer Linsenfassung (5) und mindestens einer Linse (4), einen Bildsensor (8) zum Erfassen und Wandeln optischer Signale in elektrische Bildsignale (S1), eine Trägereinrichtung (9), auf der der Bildsensor (8) montiert und kontaktiert ist, und
ein Kameragehäuse (10) zum Aufnehmen des Objektivs (3) und der Trägereinrichtung (9), wobei
das Kameragehäuse (10) ein erstes Gehäuseteil (11) aufweist und das Objektiv (3) mit dem ersten Gehäuseteil (11) verbunden und von dem ersten Gehäuseteil (11) getragen ist,
**dadurch gekennzeichnet, dass**
- die Trägereinrichtung (9) am Objektiv (3) fixiert und gehalten ist und dass das Objektiv (3) eine erste zylindrische Objektiv-Passungsfläche (37) zur Befestigung am ersten Gehäuseteil (11) und eine zu dieser entlang der optischen Achse (28) versetzte zweite zylindrische Objektiv-Passungsfläche (29) zur Befestigung der Trägereinrichtung (9) aufweist, oder
- dass die Trägereinrichtung (9) an dem ersten Gehäuseteil (11) fixiert und gehalten ist und
- dass die Trägereinrichtung (9) einen im Wesentlichen parallel zu der optischen Achse (28) verlaufenden Trägerring (18) aufweist, der stirnseitig an dem ersten Gehäuseteil (11) fixiert ist; oder
- dass die Trägereinrichtung (9) Aufnahmen (24) aufweist, in denen Ankerelemente (25) des ersten Gehäuseteils (11) angebunden sind.

2. Kameramodul (1) nach Anspruch 1, **dadurch gekennzeichnet, dass** an dem ersten Gehäuseteil (11) eine erste Gehäuse-Passungsfläche (37) ausgebildet ist, und
das Objektiv (3) eine erste Objektiv-Passungsfläche (16) aufweist,
wobei die erste Gehäuse-Passungsfläche (37) und die erste Objektiv-Passungsfläche (16) direkt oder über Zwischenmittel miteinander verbunden sind.

3. Kameramodul (1) nach Anspruch 2, **dadurch gekennzeichnet, dass** die Gehäuse-Passungsfläche (37) und die erste Objektiv-Passungsfläche (16) zumindest bereichsweise zylindrisch ausgebildet sind, und
an dem Objektiv und/oder an dem ersten Gehäuseteil (11) ein Anschlag (38) zur Festlegung der Position des Objektivs (3) in dem ersten Gehäuseteil (11) ausgebildet ist.

4. Kameramodul (1) nach Anspruch 1, **dadurch gekennzeichnet, dass** die Trägereinrichtung (9) als dreidimensional konturierter Schaltungsträger ausgebildet ist, der mindestens eine Leiterbahn (32) zur Kontaktierung des Bildsensors (8) und Objektiv-Aufnahmemittel (18, 19) zur Aufnahme und/oder Abdichtung des Objektivs (3) aufweist.

5. Kameramodul (1) nach Anspruch 4, **dadurch gekennzeichnet, dass** die Objektiv-Aufnahmemittel (18, 19) auf einer zum Objektiv (3) zeigenden Vorderseite (9a) der Trägereinrichtung (9) und die mindestens eine Leiterbahn (32) als Verdrahtungsebene auf der Rückseite (9b) der Trägereinrichtung (9) ausgebildet sind.

6. Kameramodul (1) nach Anspruch 4 oder 5, **dadurch gekennzeichnet, dass** die Trägereinrichtung (9) im Bereich der optischen Achse (28) eine Aussparung (35) aufweist und der Bildsensor (8) an der Rückseite der Trägereinrichtung (9) derartig montiert ist, dass seine lichtempfindliche Sensorfläche (7) durch die Aussparung (35) zum Objektiv (3) hin ausgerichtet ist, vorzugsweise in Flip-Chip-Technik.

7. Kameramodul (1) nach Anspruch 6, **dadurch gekennzeichnet, dass** Signalleitungen (8), Kontaktierflächen (31) und die lichtempfindliche Sensorfläche (7) des Bildsensors (8) auf der Vorderseite (8a) des Bildsensors (8) ausgebildet sind, wobei die Kontaktierflächen (31) über Kontaktiermittel mit der mindestens einen Leiterbahn (32) der Trägereinrichtung (9) kontaktiert sind.

8. Kameramodul (1) nach einem der Ansprüche 4 bis 7, **dadurch gekennzeichnet, dass** die Trägereinrichtung (9) als einteiliger Schaltungsträger aus einem Kunststoff, insbesondere als spritzgegossener Schaltungsträger (9), ausgebildet ist, und die Objektiv-Aufnahmemittel (18, 19) als in Richtung der optischen Achse (28) vorstehende Profilierungen ausgebildet sind.

9. Kameramodul (1) nach Anspruch 8, **dadurch gekennzeichnet, dass** die Objektiv-Aufnahmemittel (18, 19) ein Dichtungsmittel (18) aufweisen, das in eine Nut (20) oder Vertiefung des Objektivs (3) eingreift und in der Nut (20) oder Vertiefung in Richtung der optischen Achse (28) längsverschiebbar ist für eine Fokussierung des Bildsensors (8) relativ zum Objektiv (3).

10. Kameramodul (1) nach einem der Ansprüche 1 bis 9, **dadurch gekennzeichnet, dass** die Trägereinrichtung (9) mit einem an dem ersten Gehäuseteil (11) aufgenommenen Haupt-Schaltungsträger (13) kontaktiert ist.

11. Verfahren zum Herstellen eines Kameramoduls (1) nach einem der Ansprüche 1 bis 10, mit wenigstens folgenden Schritten:
Befestigen eines Objektivs (3) an einem ersten Gehäuseteil (11) (St1), Ansetzen einer Trägereinrichtung (9), an der ein Bildsensor (8) montiert und kontaktiert ist, an das Objektiv (3) und Justieren durch Längsverschieben der Trägereinrichtung (9) entlang einer optischen Achse (28) des Objektivs (3) unter Auswertung von Bildsignalen (S1) des Bildsensors (8) (St2),
Fixieren der Trägereinrichtung (9) an dem Objektiv (3) und/oder dem ersten Gehäuseteil (11) (St3), und
Verschließen des ersten Gehäuseteils (11) durch wenigsten ein zweites Gehäuseteil (12) unter Ausbildung eines Kameragehäuses (10), in dem das Objektiv (3) und die Trägereinrichtung (9) aufgenommen sind (St5).

## Claims

1. Camera module (1), wherein the camera module (1) includes at least:
an objective (3) having a lens frame (5) and at least one lens (4),
an image sensor (8) for capturing and converting optical signals into electrical image signals (S1), a carrier device (9) on which the image sensor (8) is mounted and contacted, and
a camera housing (10) for holding the objective (3) and the carrier device (9), wherein
the camera housing (10) has a first housing portion (11) and
the objective (3) is connected to the first housing portion (11) and carried by the first housing portion (11),
**characterized in that**
- the carrier device (9) is fixed to and retained on the objective (3) and
**in that** the objective (3) has a first cylindrical objective fitting surface (37) for attachment to the first housing portion (11) and a second cylindrical objective fitting surface (29), which is offset with respect to the former along the optical axis (28), for attachment of the carrier device (9), or
- **in that** the carrier device (9) is fixed to and retained on the first housing portion (11) and
- **in that** the carrier device (9) has a carrier ring (18) that extends substantially parallel to the optical axis (28) and is fixed on the front end to the first housing portion (11); or
- **in that** the carrier device (9) has holders (24) in which anchoring elements (25) of the first housing portion (11) are connected.

2. Camera module (1) according to Claim 1, **characterized in that** a first housing fitting surface (37) is formed on the first housing portion (11), and the objective (3) has a first objective fitting surface (16),
wherein the first housing fitting surface (37) and the first objective fitting surface (16) are connected to one another directly or by intermediate means.

3. Camera module (1) according to Claim 2, **characterized in that** the housing fitting surface (37) and the first objective fitting surface (16) are at least partially cylindrically formed, and
an abutment (38) for fixing the position of the objective (3) in the first housing portion (11) is formed on the objective and/or on the first housing portion (11).

4. Camera module (1) according to Claim 1, **characterized in that** the carrier device (9) is configured as a three-dimensionally contoured circuit carrier that has at least one conductor track (32) for contacting the image sensor (8) and objective holding means (18, 19) for holding and/or sealing the objective (3) .

5. Camera module (1) according to Claim 4, **characterized in that** the objective holding means (18, 19), on a front side (9a) of the carrier device (9), facing the objective (3), and the at least one conductor track (32) are formed as a wiring plane on the rear side (9b) of the carrier device (9).

6. Camera module (1) according to Claim 4 or 5, **characterized in that** the carrier device (9) has in the region of the optical axis (28) a cutout (35) and the image sensor (8) is mounted on the rear side of the carrier device (9) such that the light-sensitive sensor surface (7) thereof is oriented through the cutout (35) toward the objective (3), preferably using flip-chip technology.

7. Camera module (1) according to Claim 6, **characterized in that** signal lines (8), contact areas (31) and the light-sensitive sensor surface (7) of the image sensor (8) are formed on the front side (8a) of the image sensor (8), wherein the contacting areas (31) are contacted via a contacting means by the at least one conductor track (32) of the carrier device (9).

8. Camera module (1) according to one of Claims 4 to 7, **characterized in that** the carrier device (9) is formed as a one-piece circuit carrier made from a plastic material, in particular as an injection-moulded circuit carrier (9), and the objective holding means (18, 19) are formed as profilings that project in the direction of the optical axis (28).

9. Camera module (1) according to Claim 8, **characterized in that** the objective holding means (18, 19) include a sealing means (18) that engages in a groove (20) or recess of the objective (3) and is longitudinally displaceable in the groove (20) or recess in the direction of the optical axis (28) for focusing the image sensor (8) relative to the object (3).

10. Camera module (1) according to one of Claims 1 to 9, **characterized in that** the carrier device (9) is contacted by a main circuit carrier (13) held on the first housing portion (11).

11. Method for producing a camera module (1) according to one of Claims 1 to 10, having at least the following steps:
attaching an objective (3) to a first housing portion (11) (St1),
placing a carrier device (9) on which an image sensor (8) is mounted and contacted onto the objective (3) and adjusting by way of longitudinal displacement of the carrier device (9) along an optical axis (28) of the objective (3) with evaluation of image signals (S1) of the image sensor (8) (St2),
fixing the carrier device (9) to the objective (3) and/or to the first housing portion (11) (St3), and
closing the first housing portion (11) by way of a second housing portion (12) to form a camera housing (10) in which the objective (3) and the carrier device (9) are held (St5).

## Revendications

1. Module de caméra (1), dans lequel le module de caméra (1) comporte au moins :
un objectif (3) avec une monture de lentille (5) et au moins une lentille (4), un capteur d'image (8) pour saisir et convertir des signaux optiques en signaux d'image électriques (S1), un dispositif de support (9),
sur lequel le capteur d'image (8) est monté et mis en contact, et
un boîtier de caméra (10) pour accueillir l'objectif (3) et le dispositif de support (9), dans lequel le boîtier de caméra (10) comporte une première partie de boîtier (11) et l'objectif (3) est raccordé à la première partie de boîtier (11) et porté par la première partie de boîtier (11),
**caractérisé en ce que**
- le dispositif de support (9) est fixé et maintenu sur l'objectif (3) et **en ce que** l'objectif (3) comporte une première surface d'adaptation d'objectif (37) afin de le solidariser à la première partie de boîtier (11) et une deuxième surface d'adaptation d'objectif (29) cylindrique décalée de celle-ci le long de l'axe optique (28) pour solidariser le dispositif de support (9), ou
- **en ce que** le dispositif de support (9) est fixé et maintenu sur la première partie de boîtier (11) et
- **en ce que** le dispositif de support (9) comporte un anneau porteur (18) essentiellement parallèle à l'axe optique (28), lequel est fixé frontalement sur la première partie de boîtier (11) ; ou
- **en ce que** le dispositif de support (9) comporte des emplacements (24), à l'intérieur desquels des éléments d'ancrage (25) de la première partie de boîtier (11) sont amarrés.

2. Module de caméra (1) selon la revendication 1, **caractérisé en ce qu'**une première surface d'adaptation de boîtier (37) est réalisée sur la première partie de boîtier (11), et
l'objectif (3) comporte une première surface d'adaptation d'objectif (16), dans lequel la première surface d'adaptation de boîtier (37) et la première surface d'adaptation d'objectif (16) sont raccordées l'une à l'autre directement ou par le biais d'un intercalaire.

3. Module de caméra (1) selon la revendication 2, **caractérisé en ce que** la première surface d'adaptation de boîtier (37) et la première surface d'adaptation d'objectif (16) sont réalisées au moins en partie de manière cylindrique, et
une butée (38) est réalisée sur l'objectif et/ou sur la première partie de boîtier (11) pour fixer la position de l'objectif (3) dans la première partie de boîtier (11) .

4. Module de caméra (1) selon la revendication 1, **caractérisé en ce que** le dispositif de support (9) est réalisé comme support de circuit à contour tridimensionnel, lequel comporte au moins une bande conductrice (32) créant un contact avec le capteur d'image (8) et des moyens d'accueil d'objectif (18, 19) pour accueillir et/ou joindre l'objectif (3) de façon étanche.

5. Module de caméra (1) selon la revendication 4, **caractérisé en ce que** les moyens d'accueil d'objectif (18, 19) sont réalisés sur une face avant (9a) du dispositif de support (9) faisant face à l'objectif (3) et l'au moins une bande conductrice (32) est réalisée comme plan de câblage sur la face arrière (9b) du dispositif de support (9).

6. Module de caméra (1) selon la revendication 4 ou 5, **caractérisé en ce que** le dispositif de support (9) comporte dans la zone de l'axe optique (28) une échancrure (35) et le capteur d'image (8) est monté sur la face arrière du dispositif de support (9) de telle façon que sa surface de capteur photosensible (7) est orientée vers l'objectif (3) au travers de l'échancrure (35), de préférence selon la technique des puces à protubérances (Flip-Chip).

7. Module de caméra (1) selon la revendication 6, **caractérisé en ce que** les fils de signaux (8), les surfaces de contact (31) et la surface de capteur photosensible (7) du capteur d'image (8) sont réalisées sur la face avant (8a) du capteur d'image (8), dans lequel les surfaces de contact (31) entre en contact avec l'au moins une bande conductrice (32) du dispositif de support (9) par le biais de moyens de contact.

8. Module de caméra (1) selon l'une des revendications 4 à 7, **caractérisé en ce que** le dispositif de support (9) est réalisé comme support de circuit d'une pièce en plastique, en particulier comme support de circuit (9) moulé par injection, et les moyens d'accueil d'objectif (18, 19) sont réalisés comme profilages saillant dans la direction des axes optiques (28).

9. Module de caméra (1) selon la revendication 8, **caractérisé en ce que** les moyens d'accueil d'objectif (18, 19) comportent un moyen d'étanchéité (18), lequel entre en prise dans une rainure (20) ou une dépression de l'objectif (3) et peut coulisser longitudinalement dans la rainure (20) ou la dépression en direction de l'axe optique (28) pour une mise au point du capteur d'image (8) relativement à l'objectif (3).

10. Module de caméra (1) selon l'une des revendications 1 à 9, **caractérisé en ce que** le dispositif de support (9) entre en contact avec un premier support de circuit principal (13) accueilli sur la première partie de boîtier (11).

11. Procédé de fabrication d'un module de caméra (1) selon l'une des revendications 1 à 10, avec au moins les étapes suivantes :
solidarisation d'un objectif (3) à une première partie de boîtier (11) (St1),
application sur l'objectif (3) d'un dispositif de support (9), sur lequel le capteur d'image (8) est monté et mis en contact, et ajustement par coulissement longitudinal du dispositif de support (9) le long d'un axe optique (28) de l'objectif (3) en exploitant les signaux d'image (S1) du capteur d'image (8) (St2),
fixation du dispositif de support (9) sur l'objectif (3) et/ou la première partie de boîtier (11) (St3), et
fermeture de la première partie de boîtier (11) par au moins une deuxième partie de boîtier (12) pour réaliser un boîtier de caméra (10), à l'intérieur duquel l'objectif (3) et le dispositif de support (9) sont accueillis (St5).
